# EUROPÄISCHE PATENTANMELDUNG

(11) **EP 2 842 442 A1**
(43) Veröffentlichungstag der Anmeldung: **04.03.2015**
(21) Anmeldenummer: 13182261.1
(22) Anmeldetag: 29.08.2013
(51) Int. Cl.: A42B 3/04, A63B 29/02, G01S 5/02

(54) **Suchgerät und Verfahren zum Betreiben eines Suchgeräts**

(71) Anmelder: Optus GmbH, 92245 Kümmersbruck (DE)
(72) Erfinder: Wegner, Jürgen, 10777 Berlin (DE)
(74) Vertreter: Hofstetter, Schurack & Partner

(57) **Zusammenfassung**

Die Erfindung betrifft ein Suchgerät (10) mit einer Empfangseinrichtung (14), um Sendesignale eines Senders zur Ortung des Senders zu empfangen, und einer Sendeeinrichtung (14), um Sendesignale zu senden. Weiterhin weist das Suchgerät (10) eine Ermittlungseinrichtung (16) auf, um anhand von von der Empfangseinrichtung (14) empfangenen Sendesignalen eine Suchinformation bereitzustellen, und eine Ausgabeeinrichtung (18), die dazu ausgelegt ist, eine von der Ermittlungseinrichtung (16) bereitgestellte Suchinformation auszugeben. Dabei ist zumindest die Ausgabeeinrichtung (18) in einen Helm (12) integriert. Die Erfindung betrifft weiterhin ein entsprechendes Verfahren zum Betreiben eines Suchgeräts (10). Des weiteren betrifft die Erfindung ein Suchgerät (110), dessen Ausgabeeinrichtung (118) eine Schnittstelle (130a, 130b, 130c) zum Koppeln mit mindestens zwei Lautsprechern aufweist, und dazu ausgelegt ist, ein erstes Signal für zumindest einen ersten Lautsprecher und ein zweites Signal für zumindest einen zweiten Lautsprecher derart bereitzustellen, dass die Suchinformation durch Laufzeit und/oder Pegelunterschiede des ersten und zweiten Signals kodiert ist.

## Beschreibung

Die vorliegende Erfindung betrifft ein Suchgerät, insbesondere ein Lawinen-Verschütteten-Suchgerät mit einer Empfangseinrichtung, welche dazu ausgelegt ist, Sendesignale zumindest eines Senders zur Ortung des Senders zu empfangen, mit einer Sendeeinrichtung, die dazu ausgelegt ist, Sendesignale zu senden, einer Ermittlungseinrichtung, die dazu ausgelegt ist, anhand von empfangenen Sendesignalen eine Suchinformation bereitzustellen, und mit einer Ausgabeeinrichtung, die dazu ausgelegt ist eine bereitgestellte Suchinformation, insbesondere Richtungs- und/oder Entfernungsinformation, auszugeben. Darüber hinaus betriff die Erfindung ein Verfahren zum Betreiben eines Suchgeräts, wobei im Falle, dass eine Empfangseinrichtung des Suchgeräts Sendesignale zumindest eines Sender zur Ortung des Senders empfängt, eine Ermittlungseinrichtung des Suchgeräts anhand der empfangenen Sendesignale eine Suchinformation bereitstellt und eine Ausgabeeinrichtung des Suchgeräts die bereitgestellte Suchinformation ausgibt.

Aus dem Stand der Technik sind Suchgeräte, insbesondere Lawinenverschüttetensuchgeräte, bekannt, die in einem Sendemodus ein Signal senden und in einem Empfangsmodus ein Signal empfangen können. Die Sendesignale, die beispielsweise von einem verschütteten Gerät gesendet werden, können durch das Suchgerät empfangen und so das verschüttete Gerät geortet werden. Üblicherweise werden solche Geräte am Körper getragen, wie beispielsweise in einer Tasche, an einem Gurt oder in einem Rucksack. Das Anzeigen einer Ortungsinformation kann dabei auf einem Display des Suchgeräts erfolgen. Weiterhin kann auch die Information über die Entfernung zu einem verschütteten Gerät durch die Lautstärke eines Pieptons angezeigt werden. Zielsetzung solcher Suchgeräte ist es immer, eine verschüttete Person möglichst schnell zu finden und dadurch ihre Überlebenschancen zu erhöhen. Dabei nehmen die Überlebenschancen mit zunehmender Verschüttungszeit, insbesondere bereits im Minutenbereich, sehr schnell ab. Wesentlich dabei ist vor Allem auch die Art und Weise der Anzeige der Ortungsinformation. Diese sollte für den Suchenden möglichst einfach erfassbar und verständlich sein und auch in der Handhabung möglichst einfach ausgebildet sein, um ein schnelles Auffinden eines Verschütteten zu ermöglichen.

Mit den oben genannten Möglichkeiten der Anzeige der Ortungsinformation sind jedoch Nachteile verbunden, die einem möglichst schnellen Auffinden entgegenstehen. Beispielsweise fordert die Entfernungsangabe durch die Lautstärke eines Pieptons ein sehr sensibles Gehörempfinden, um Lautstärkeunterschiede zweifelsfrei registrieren zu können. Zudem hemmen vor allem auch Umgebungsgeräusche das leichte Erkennen von Lautstärkeunterschieden. Die Anzeige der Ortungsinformation in optischer Form, wie beispielsweise auf einem Display des Suchgeräts, hat diesbezüglich zwar Vorteile, jedoch muss dabei der Suchende seine Aufmerksamkeit immer wieder auf das Display und somit von seinem Weg und der Umgebung ab lenken. Weiterhin kostet es auch Zeit, bis solche Geräte in Betrieb genommen werden können. Tritt der Fall auf, dass jemand verschüttet wird, so muss das Suchgerät erst aus dem Rucksack oder der Tasche genommen werden oder vom Gürtel gelöst werden. Zudem besteht bei solchen Geräten auch immer wieder die Gefahr, dass die Mitnahme der Suchgeräte vergessen wird und diese somit in Notsituationen gar nicht zur Verfügung stehen.

Es ist daher Aufgabe der vorliegenden Erfindung, ein Suchgerät und ein Verfahren zum Betreiben eines Suchgeräts bereitzustellen, mittels welchen die Überlebenschancen eines Verschütteten erhöht werden können.

Diese Aufgabe wird gelöst durch ein Suchgerät mit den Merkmalen des Patentanspruchs 1 und einem Verfahren zum Betreiben eines Suchgeräts mit den Merkmalen des Patentanspruchs 14 gemäß einem ersten Aspekt der Erfindung und ein Suchgerät mit den Merkmalen des Patentanspruchs 15 gemäß einem zweiten Aspekt der Erfindung. Vorteilhafte Ausgestaltungen finden sich in den abhängigen Ansprüchen.

Das erfindungsgemäße Suchgerät, insbesondere Lawinen-Verschütteten-Suchgerät, gemäß einem ersten Aspekt der Erfindung weist eine Empfangseinrichtung auf, die dazu ausgelegt ist, Sendesignale zumindest eines Senders zur Ortung des Senders zu empfangen und eine Sendeeinrichtung, die dazu ausgelegt ist, Sendesignale zu senden. Weiterhin weist das Suchgerät eine Ermittlungseinrichtung auf, die dazu ausgelegt ist, anhand von von der Empfangseinrichtung empfangenen Sendesignalen eine Suchinformation, insbesondere eine Richtungs- und/oder Entfernungsinformation, bereitzustellen, und eine Ausgabeeinrichtung, die dazu ausgelegt ist, eine von der Ermittlungseinrichtung bereitgestellte Suchinformation auszugeben. Erfindungsgemäß ist dabei zumindest die Ausgabeeinrichtung in einen Helm integriert.

Durch die Integration der Ausgabeeinrichtung in einen Helm kann so die Suchinformation, insbesondere die Richtungs- und/oder Entfernungsinformation, direkt an den akustischen und/oder visuellen Sinnesorganen des Suchenden bereitgestellt werden, was eine sehr leichte und deutliche Erfassung der Suchinformation für einen Benutzer zur Folge hat. Darüber hinaus besteht hierbei nicht so leicht die Gefahr eines Vergessens oder Verlierens der Ausgabeeinrichtung wie bei einem separaten Bauteil, das in der Tasche oder dem Gürtel getragen wird. Das Tragen eines Helms wird nicht so leicht vergessen, wie beispielsweise das Mitführen einer andersartigen Ausgabeeinrichtung, da der Helm üblicherweise Teil einer Sportausrüstung ist, wie beim Skifahren und anderen Wintersportarten. Auch kann der Helm sicher am Körper, insbesondere am Kopf befestigt werden, so dass auch die Verlustgefahr gering ist. Dadurch kann also gewährleistet werden, dass zumindest die Ausgabeeinrichtung immer mitgerührt wird.

Des Weiteren besteht auch ein großer Vorteil darin, dass im Gebrauchsfall nicht lange nach der Ausgabeeinrichtung in einer Tasche und dergleichen gesucht werden muss, sondern sie steht in jeder Situation sofort zum Gebrauch zur Verfügung. Im Falle einer Verschüttung einer Person durch eine Lawine nehmen die Überlebenschancen mit zunehmender Verschüttungszeit, insbesondere im Minutenbereich, sehr schnell ab, so dass gerade eine möglichst schnelle in Betriebnahme des Suchgeräts von essenzielle Bedeutung ist. Ein weiterer großer Vorteil ist zudem noch, dass kein separates Ausgabegerät in der Hand gehalten werden muss. Der Suchende hat somit beide Hände frei, was ihm ermöglicht, einfacher zum Verschütteten vorzudringen, weitere Bergungsmittel mitzuführen oder zu verwenden, usw.. Ein erfindungsgemäßes Suchgerät vereinfacht somit die Handhabung ernorm und ermöglicht somit ein möglichst schnelles Auffinden auf vielfältige Weise.

Bei einer vorteilhaften Ausgestaltung der Erfindung weist der Helm ein Visier auf, wobei die Ausgabeeinrichtung dazu ausgelegt ist, die Suchinformation, insbesondere Richtungs- und/oder Entfernungsinformation, optisch auf dem Visier anzuzeigen. Das Visier des Helms kann dabei beispielsweise als Projektionsfläche eines Head-up-Displays fungieren. Die Suchinformation kann dann auf das Visier, beispielsweise in einem zentralen Sichtbereich eines Benutzers bzw. in einem zentralen Bereich des Visiers, projiziert werden oder auch an einen Randbereichbereich des Visiers und somit an einem Gesichtsfeldrand des Benutzers angezeigt werden. Auf vorteilhafte Weise kann so der Benutzer gleichzeitig seine Umgebung und die auf dem Visier angezeigten Suchinformationen wahrnehmen. Eine graphische Darstellung der Suchinformation, insbesondere der Richtungs- und/oder Entfernungsinformation, wie beispielsweise durch einen Pfeil, ist dabei besonders vorteilhaft. So kann diese graphische Darstellung der Suchinformation als Projektion auf dem Visier beispielsweise der durch das Visier hindurch wahrnehmbaren Umgebung überlagert werden, was eine besonders einfach zu erfassende, leicht ablesbare und interpretierbare Weganweisung für den Benutzer darstellt. Darüber hinaus hat die Anzeige der Suchinformation, insbesondere Richtungs- und/oder Entfernungsinformation, auf dem Visier zusätzlich den Vorteil, dass so kein separates Gerät in der Hand gehalten werden muss und dem Benutzer somit beide Hände frei zur Verfügung stehen. Diese Ausgestaltung ermöglicht somit eine unbeeinträchtigte Wahrnehmung und Erfassung der Umgebung bei gleichzeitig leicht erfassbarer Suchinformation und ist in der Handhabung besonders einfach.

Bei einer weiteren vorteilhaften Ausgestaltung der Erfindung umfasst die Ausgabeeinrichtung akustische Ausgabemittel und ist dazu ausgelegt, die Suchinformation, insbesondere Richtungs- und/oder Entfernungsinformation, über die Ausgabemittel akustisch auszugeben. Die akustische Ausgabe der Suchinformation kann dabei alternativ oder auch zusätzlich zur visuellen Anzeige der Suchinformation erfolgen. Eine ausschließlich akustische Ausgabe hat dabei den Vorteil, dass so eine vollständig unbeeinträchtigte visuelle Erfassung der Umgebung für einen Benutzer bereitgestellt ist. Der Helm muss somit auch kein Visier aufweisen. Somit stehen auch für die Ausgestaltung des Helms mehr Freiheitsgrade zur Verfügung. Ein weiterer besonders großer Vorteil zeigt sich auch hierbei wiederum darin, dass die Ausgabeeinrichtung im Helm integriert ist, denn so kann eine akustische Ausgabe der Suchinformation in unmittelbarer Nähe der Ohren eines Benutzers ermöglicht werden, was eine Erfassung der Suchinformation wiederum deutlich vereinfacht und dadurch die Suche beschleunigt. Zudem schirmt der Helm auch Umgebungsgeräusche ab, so dass auch dadurch eine verbesserte Akustik bereitgestellt ist, im Gegensatz zu in der Hand zu haltenden piepsenden Geräten. Darüber hinaus hat auch diese Art der Ausgabe der Suchinformation durch die Integration der Ausgabeeinrichtung in den Helm den Vorteil, dass der Benutzer die Ausgabeeinrichtung nicht in der Hand halten muss und somit wiederum beide Hände frei hat.

Die Ausgabe der Suchinformation, insbesondere Richtungs- und/oder Entfernungsinformation, kann auch gleichzeitig als visuelle Anzeige und als akustische Ausgabe erfolgen. Durch die redundante Ausgabe der Suchinformation auf zwei unterschiedliche Arten kann die Suchinformation dabei von einem Benutzer noch eingängiger und deutlicher erfasst werden. Auch im Falle eines Auftretens eines Defekts einer Komponente hat dies besonders große Vorteile. Tritt eine Fehlfunktion bei einer Art der Ausgabemöglichkeit auf, so dass beispielsweise eine Anzeige auf dem Visier nicht möglich ist, so kann durch die andere Ausgabemöglichkeit, wie die akustische, weiterhin die Ausgabe der Suchinformation bereitgestellt werden. Darüber hinaus stehen durch die Kombination einer visuellen Anzeige und einer akustischen Ausgabe mehr Möglichkeiten bereit, unterschiedliche Informationen gleichzeitig auszugeben, wie z.B. eine Richtung und Entfernung, sowie z.B. auch die Anzahl an georteten Sendern und deren Position.

Dabei können die Ausgabemittel als mindestens ein erster und mindestens ein zweiter Lautsprecher ausgebildet sein. Die Lautsprecher sind dabei bevorzugt an einer Innenseite des Helms angeordnet, weiterhin bevorzugt in einem Bereich, in welchem sich die Ohren eines Benutzers bei einem Tragen des Helms befinden, d.h. sie sind bevorzugt an der Innenseite des Helms und gegenüberliegend angeordnet. Der große Vorteil von zwei Lautsprechern im Bereich der Ohren ist, dass dadurch ein Stereo-Klang bzw. Raumklang erzeugt werden kann. Durch einen Raumklang können einem Benutzer somit die Suchinformation, insbesondere Richtungs- und/oder Entfernungsinformation, auf intuitive besonders eingängige Weise vermittelt werden, wobei durch den Raumklang weiterhin vielzählige Möglichkeiten bereitgestellt sind, eine Suchinformation in Form einer Laufrichtung, Richtung zum georteten Signal und/oder Entfernung zum georteten Signal zu vermitteln.

Die akustische Ausgabe durch die Ausgabeeinrichtung kann dabei dergestalt erfolgen, dass akustische Signale Tonhöhen und/oder Lautstärkepegel aufweisen, die durch die auszugebende Suchinformation, insbesondere Richtungs- und/oder Entfernungsinformation, bestimmt sind. Beispielsweise kann bei einer Suche die Annäherung an den georteten bzw. zu suchenden Sender durch eine Erhöhung der Tonhöhe kenntlich gemacht werden und eine Rechts-Links-Information kann dem Benutzer durch einen höheren Lautstärkepegel eines entsprechenden Lautsprechers gegenüber dem anderen Lautsprecher vermittelt werden.

Insbesondere um eine Richtungsinformation akustisch auszugeben, ist es eine bevorzugte Ausgestaltung der Erfindung, dass die Ausgabeeinrichtung dazu ausgelegt ist, ein akustisches Signal durch den ersten und zweiten Lautsprecher derart auszugeben, dass sich das vom ersten Lautsprecher ausgegebene akustische Signal abhängig von der bereitgestellten Richtungsinformation, in zumindest einer Eigenschaft vom vom zweiten Lautsprecher ausgegebenen akustischen Signal unterscheidet, beispielsweise so, dass im Falle, dass zumindest als Teil der Richtungsinformation eine Gerade-Aus-Richtung bereitgestellt ist, das durch den ersten Lautsprecher ausgegebene und das durch den zweiten Lautsprecher ausgegebene akustische Signal identisch sind, und dass im Falle, dass zumindest als Teil der bereitgestellten Richtungsinformation, eine von der Gerade-Aus-Richtung verschiedene Richtung bereitgestellt ist, sich das durch den ersten Lautsprecher ausgegebene akustische Signal vom durch den zweiten Lautsprecher ausgegebenen akustischen Signal in zumindest einer Eigenschaft in Abhängigkeit von der bereitgestellten Richtungsinformation unterscheiden. Dadurch kann auf besonders einfache Weise dem Benutzer eine Links-Rechts-Information sowie auch eine Richtungsweisung ausgegeben werden.

Dabei stehen wiederum viele Möglichkeiten in Bezug auf die unterschiedlich ausgestaltbaren Eigenschaften des Signals bereit.

Beispielsweise ist bei einer vorteilhaften Ausgestaltung der Erfindung die Ausgabeeinrichtung dazu ausgelegt, ein akustisches Signal derart auszugeben, dass das vom ersten Lautsprecher ausgegebene akustische Signal eine von einer bereitgestellten Suchinformation, insbesondere Richtungs- und/oder Entfernungsinformation, abhängige Laufzeitdifferenz und/oder Pegeldifferenz zum vom zweiten Lautsprecher ausgegebenen akustischen Signal aufweist, insbesondere so dass die Suchinformation, insbesondere Richtungs- und/oder Entfernungsinformation, durch Laufzeit und/oder Pegelunterschiede der vom ersten und zweiten Lautsprecher ausgegebenen akustischen Signale kodiert ist.

Beispielsweise kann das akustische Signal auf den jeweiligen Lautsprechern derart ausgegeben werden, dass eine virtuelle Schallquelle erzeugt wird, deren Richtungs- und/oder Entfernungslokalisation durch einen den Helm auf dem Kopf tragenden Benutzer mit dem realen Ort des georteten und zu suchenden Senders übereinstimmt, oder zumindest einer Richtung zugeordnet ist, in welche sich der Benutzer bewegen soll, um zum Sender zu gelangen. Insbesondere kann dadurch ein Klang erzeugt werden, der beim Benutzer den Eindruck erweckt, als käme er aus einer durch die Suchinformation, insbesondere Richtungs- und/oder Entfernungsinformation, bestimmte Richtung. Durch Folgen dieser Richtung wird der Benutzer somit auf besonders einfache Weise zum georteten Sender geführt. Dabei kann das Suchgerät so ausgestaltet sein, dass der Benutzer auf gerader Linie zum georteten Sender geführt wird oder auch entlang einer Feldlinie des empfangenen Sendesignals des Senders.

Bei einer weiteren vorteilhaften Ausgestaltung der Erfindung ist die Ausgabeeinrichtung dazu ausgelegt, das akustische Signal als einen Ton, ein Tongemisch, einen Klang und/oder ein Klangemisch bereitzustellen. Tongemische oder Klanggemische sind dabei besonders vorteilhaft um einen Höreindruck zu erzeugen der eine äußerst präzise Richtungslokalisation erlaubt. Darüber hinaus verstärken diese den Raumklangeffekt und erlauben somit eine sehr schnelle Navigation des Benutzers zum zu suchenden Sender.

Bei einer weiteren besonders vorteilhaften Ausgestaltung der Erfindung ist das Suchgerät im Helm integriert. Die Integration des gesamten Suchgeräts in den Helm hat dabei vielzählige Vorteile. Zum einen gelten hierbei wieder die bereits zur Integration der Ausgabeeinrichtung in den Helm genannte Vorteile, wie, dass so ein Mitführen des Suchgeräts nicht so leicht vergessen oder verloren werden kann, dass es zur sofortigen Inbetriebnahme bereit ist und im Notfall nicht erst gesucht werden muss. Durch das Bereitstellen des Suchgeräts in einem Helm, wie z.B. einem Schutzhelm, einem Skihelm, einem Snowboardhelm, oder einem anderen Helm für Wintersportarten, kann auch ein weitaus größerer Kundenkreis adressiert werden. Dies fördert somit die Verbreitung von Suchgeräten unter Wintersportlern. Weiterhin muss so auch kein separates Bauteil für die Sende-, Empfangs- und/oder Ermittlungseinrichtung vorgesehen werden. Der Helm bietet viel Platz, um diese Komponenten im Helm zu integrieren. Zudem bietet der Helm dabei gleichzeitig auch Schutz für die Elektronik des Suchgeräts. Üblicherweise wird bei Suchgeräten die Zielsetzung verfolgt, diese möglichst klein, kompakt und handlich auszugestalten, was qualitative Einbußen zur Folge haben kann. Diese Notwendigkeit entfällt hiermit ebenfalls. Da Suchgeräte üblicherweise zumindest eine Antenne zum Senden und Empfangen aufweisen, ist ein weiterer großer Vorteil des Suchgeräts, dass im Helm ausreichend Platz ist, um eine oder mehrere Antennen integrieren zu können, und vor Allem, dass dabei der gesamte Bauraum des Helms, bzw. der Helmschale genutzt werden kann. Somit kann ein viel größerer Bauraum für die Anordnung von Antennen genutzt werden, weshalb diese wiederum selbst viel größer ausgestaltet werden können. Dies erhöht sowohl die Sende- als auch die Empfangsqualität und was besonders wichtig ist, auch die Reichweite der Sendesignale sowie den Empfangsradius.

Ein weiterer besonders großer Vorteil ist, dass so auch die Sendeeinrichtung beim Tragen des Helms am Kopf befestigt ist. Wird eine Person mit einem solchen Helm verschüttet, und die von dem Helm gesendeten Sendesignale geortet, so wird dabei der Kopf der betreffenden Person, und nicht ein anderer Körperteil, punktgeortet. Dies erhöht wiederum die Wahrscheinlichkeit beim Suchen und Ausgraben der verschütteten Person zuerst den Kopf der Person freizulegen, was wiederum deren Überlebenschancen erhöht.

Des Weiteren umfasst das Suchgerät bevorzugt drei Antennen zum Senden und Empfangen von Sendesignalen. Mit drei Antennen ist eine besonders genaue Ortung eines Senders möglich, insbesondere kann dabei auch die Tiefe ermittelt werden, in welcher sich ein georteter Sender unter der Schneeoberfläche befindet. Darüber hinaus ermöglicht ein simultanes Senden auf mehreren Antennen die Ortung des Helms auf gerader Linie. Die Antennen können dabei z.B. als Ferrit- und/oder Rahmenantennen ausgebildet sein und können bei der Herstellung des Helms z.B. einfach in den Helm eingespritzt werden, auch bei einem Vorsehen von weniger als drei Antennen. Um bei einer oder mehreren in den Helm integrierten Antenne die Stellung der Antennen im Raum ermitteln zu können, ist es weiterhin bevorzugt, dass das Suchgerät eine ebenfalls in den Helm integrierte Lagesensorik aufweist, wie z.B. Magnetfeldsensoren, G-Sensoren, Rotationssensoren.

Bei einer weiteren vorteilhaften Ausgestaltung der Erfindung ist das Suchgerät dazu ausgelegt, von einer Mehrzahl an unterschiedlichen Sendern gesendete Sendesignale zu selektieren. Dadurch können mehrere verschüttete Personen gleichzeitig geortet werden.

Bei einer weiteren Ausgestaltung der Erfindung weist das Suchgerät einen Sendemodus, in welchem die Sendeeinrichtung Sendesignale sendet, und einen Empfangsmodus auf, in welchem Sendesignale durch die Empfangseinrichtung empfangbar sind, wobei das Suchgerät zwischen einem Empfangsmodus und dem Sendemodus durch manuelle Betätigung durch einen Benutzer umschaltbar ist. Zum Umschalten kann dabei ein funkgesteuerter Umschalter, ein mechanischer Schalter im Helm oder ein abgesetzter mechanischer Schalter vorgesehen sein. Besonders die Anordnung des Schalters am/im Helm ermöglicht eine besonders einfache und schnelle Handhabung. Der Helm kann so im Notfall beim Verschütten einer Person einfach und verzögerungsfrei vom Sende- in den Empfangsmodus umgeschaltet werden und steht somit sofort zur Suche bereit.

Bei einer weiteren Ausgestaltung der Erfindung ist das Suchgerät dazu ausgelegt, bei einem Anlegen des Helms automatisch einzuschalten. Bevorzugt schaltet das Suchgerät beim automatischen Einschalten dabei in den Sendemodus. Durch diese vorteilhafte Ausgestaltung kann das Einschalten des Suchgeräts nicht vergessen werden. Zudem wird dadurch wiederum eine besonders einfache Handhabung bereitgestellt.

Weiterhin ist es bevorzugt, dass das Suchgerät dazu ausgelegt ist, bei einem Ablegen des Helms automatisch abzuschalten. Auf besonders vorteilhafte Weise kann hierbei die Tatsache ausgenutzt werden, dass ein Helm an sich eine Schutzfunktion erfüllt. Bei einem Ablegen des Helms kann also davon ausgegangen werden, dass die aktuelle Situation keine Gefahren birgt, weshalb auch davon ausgegangen werden kann, dass die Funktion des Suchgeräts nicht mehr benötigt wird. Somit kann auch ein Ausschalten des Suchgeräts nicht vergessen werden, so dass dies einen unnötigen Stromverbrauch vermeidet. Vorteilhafterweise kann dadurch auch die Wahrscheinlichkeit dafür reduziert werden, dass in einer Situation, ggf. sogar in einem Notfall, unvorhergesehen die Batterien leer sind, obwohl das Suchgerät benötigt wird. Darüber hinaus kann im Helm eine Ersatzbatterie vorgesehen sein, auf die bei leerer Hauptbatterie manuell oder automatisch umgeschaltet wird.

Beim erfindungsgemäßen Verfahren zum Betreiben eines Suchgeräts, stellt im Falle, dass eine Empfangseinrichtung eines Suchgeräts Sendesignale zumindest eines Senders zur Ortung des Senders empfängt, eine Ermittlungseinrichtung des Suchgeräts anhand der empfangenen Sendesignale eine Suchinformation, insbesondere Richtungs- und/oder Entfernungsinformation, bereit. Weiterhin gibt eine Ausgabeeinrichtung des Suchgeräts die bereitgestellte Suchinformation, insbesondere Richtungs- und/oder Entfernungsinformation, aus. Dabei wird die Suchinformation, insbesondere Richtungs- und/oder Entfernungsinformation, mittels eines Helms, in welchen zumindest die Ausgabeeinrichtung des Suchgeräts integriert ist, ausgegeben.

Die für das erfindungsgemäße Suchgerät und seine Ausgestaltungen genannten gegenständlichen Merkmale ermöglichen dabei die Weiterbildung des erfindungsgemäßen Verfahrens durch weitere Verfahrensschritte. Weiterhin gelten die für das erfindungsgemäße Suchgerät und seine Ausgestaltungen genannten Merkmale und Merkmalskombinationen und deren Vorteile in gleicher Weise für das erfindungsgemäße Verfahren.

Das erfindungsgemäße Suchgerät, insbesondere Lawinen-Verschütteten-Suchgerät, gemäß einem zweiten Aspekt der Erfindung weist eine Empfangseinrichtung auf, die dazu ausgelegt ist, Sendesignale zumindest eines Senders zur Ortung des Senders zu empfangen und eine Sendeeinrichtung, die dazu ausgelegt ist, Sendesignale zu senden. Weiterhin weist das Suchgerät eine Ermittlungseinrichtung auf, die dazu ausgelegt ist, anhand von von der Empfangseinrichtung empfangenen Sendesignalen eine Suchinformation, insbesondere Richtungs- und/oder Entfernungsinformation, bereitzustellen, und eine Ausgabeeinrichtung, die dazu ausgelegt ist, eine von der Ermittlungseinrichtung bereitgestellte Suchinformation, insbesondere Richtungsund/oder Entfernungsinformation, auszugeben. Dabei ist weist die Ausgabeeinrichtung eine Schnittstelle zum Koppeln mit mindestens zwei Lautsprechern auf, und ist dazu ausgelegt, ein erstes Signal für zumindest einen ersten Lautsprecher bereitzustellen und ein zweites Signal für zumindest einen zweiten Lautsprecher bereitzustellen, wobei das erste und zweite Signal derart beschaffen sind, dass diese von einem Lautsprecher in zumindest ein akustisches Signal umsetzbar sind. Weiterhin ist die Ausgabeeinrichtung dazu ausgelegt, das erste und zweite Signal derart bereitzustellen, dass die Suchinformation, insbesondere Richtungs- und/oder Entfernungsinformation, durch Laufzeit und/oder Pegelunterschiede des ersten und zweiten Signals kodiert ist.

Auch durch diesen Aspekt der Erfindung wird es ermöglicht, einen Stereo-Klang bzw. Raumklang zu erzeugen, durch den einem Benutzer die Suchinformation, insbesondere Richtungs- und/oder Entfernungsinformation, auf intuitive besonders eingängige Weise vermittelt werden kann. Darüber gelten die zum ersten Aspekt der Erfindung beschriebenen Vorteile in Bezug auf die Ausgestaltungen der akustischen Ausgabe der Suchinformation, insbesondere Richtungs- und/oder Entfernungsinformation, in gleicher Weise für das Suchgerät gemäß dem zweiten Aspekt der Erfindung. Auch hierbei kann durch die Laufzeit- und Pegeldifferenzen des ersten und zweiten Signals bei der akustischen Ausgabe eine virtuelle Schallquelle erzeugt werden, deren Richtungs- und/oder Entfernungslokalisation durch einen den Helm auf dem Kopf tragenden Benutzer mit dem realen Ort des georteten und zu suchenden Senders übereinstimmt, oder zumindest einer Richtung zugeordnet ist, in welche sich der Benutzer bewegen soll, um zum Sender zu gelangen. Insbesondere kann durch derartig bereitgestellte erste und zweite Signale ein Klang erzeugt werden, dem beim Benutzer den Eindruck erweckt, als käme er aus einer durch die Richtungsinformation bestimmte Richtung. Durch Folgen dieser Richtung wird der Benutzer somit auf besonders einfache Weise zum georteten Sender geführt.

Die Ausgabeeinrichtung kann dabei vorteilhafterweise mit jeder beliebigen Art von Lautsprechern gekoppelt werden, z.B. mit einem Kopfhörer mit zwei Lautsprechern oder mit zwei Ohrhörern mit zwei Lautsprechern. Somit ist die Funktion der akustischen Ausgabe der Suchinformation, insbesondere Richtungs- und/oder Entfernungsinformation, unabhängig von der Verwendung eines Helms umsetzbar. Darüber hinaus kann die Ausgabeeinrichtung auch mit einem Helm, in welchem zwei Lautsprecher integriert sind, gekoppelt werden. Die Kopplung mit Lautsprechern kann dabei eine drahtlose Kopplung, wie durch Funk, Bluetooth, Infrarot, sein, wozu die Ausgabeeinrichtung die geeignete Schnittstelle aufweisen kann. Die Kopplung kann aber auch über ein Kabel erfolgen. Dabei kann die Ausgabeeinrichtung ebenfalls die geeignete Schnittstelle aufweisen, wie z.B. eine Steckerbuchse zum Anschließen eines Kabels bzw. Steckers. Das Suchgerät kann auch mehrere unterschiedliche Schnittstellen aufweisen, so dass verschiedene Kopplungsmöglichkeiten mit Lautsprechern bereitstehen.

Weitere Einzelheiten, Merkmale und Vorteile der Erfindung ergeben sich aus den in der folgenden Zeichnung dargestellten Ausführungsbeispielen. Es zeigen:
- Fig. 1: eine schematische Darstellung eines Helms mit einem integrierten Suchgerät gemäß einem Ausführungsbeispiel der Erfindung; und
- Fig. 2: eine schematische Darstellung eines Suchgeräts mit Schnittstellenvorrichtungen zum Koppeln mit Lautsprechern gemäß einem weiteren Ausführungsbeispiel der Erfindung.

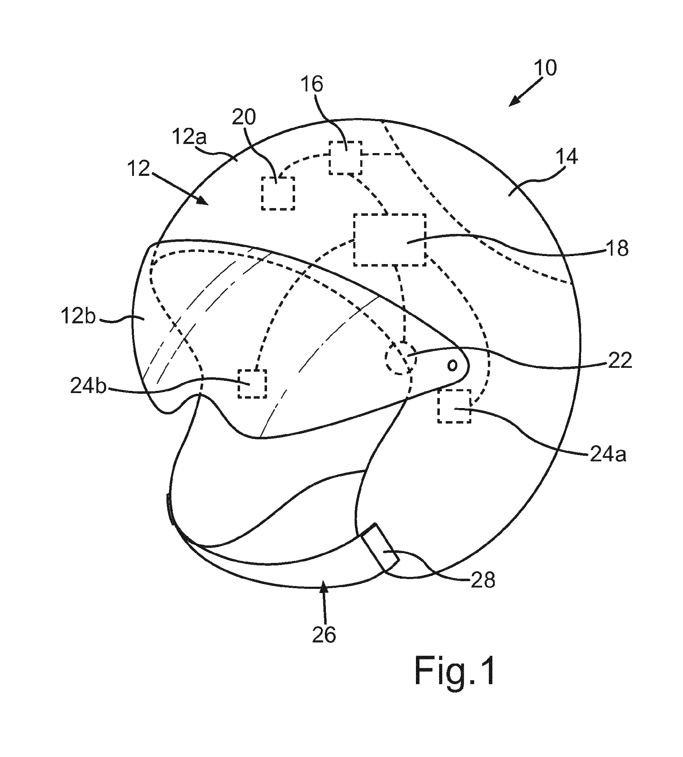

Fig. 1 zeigt eine schematische Darstellung eines Suchgeräts 10, welches in einen Helm 12 integriert ist. Das Suchgerät 10 weist dabei eine Sende- und Empfangseinrichtung 14 auf, welche zumindest eine Antenne, bevorzugt mehrere, wie z.B. drei, Antennen zum Senden und Empfangen von Sendesignalen umfasst. Die Antennen können dabei in einem Außenbereich der Helmschale 12a, insbesondere außen an der Helmschale 12a angeordnet sein oder auch in beliebiger Weise in den Helm 12 integriert sein und sich insbesondere über die gesamte Helmschale 12a erstrecken. Die Antennen können dabei als Ferrit-Antennen oder als Rahmenantennen ausgebildet sein und beispielsweise in die Helmschale 12a eingespritzt sein. Die Sende- und Empfangseinrichtung 14 ist weiterhin mit einer Ermittlungseinrichtung 16 des Suchgeräts 10 gekoppelt. Die Ermittlungseinrichtung 16 ermittelt aus von der Empfangseinrichtung empfangenen Sendesignalen eine Entfernungs- und/oder Richtungsinformation und stellt diese Information einer Ausgabeeinrichtung 18 bereit.

Um bei einer oder mehreren in den Helm 12 integrierten Antennen die Stellung der Antennen im Raum ermitteln zu können, kann das Suchgerät 10 eine ebenfalls in den Helm 12 integrierte Lagesensorik 20 aufweisen, wie z.B. Magnetfeldsensoren, G-Sensoren und/oder Rotationssensoren.

Die von der Ermittlungseinrichtung 16 ermittelte Entfernungs- und/oder Richtungsinformation kann eine ermittelte aktuelle Position des Senders, von welchem die Sendesignale empfangen wurden, umfassen, und/oder eine Richtungsanweisung an den Benutzer, so dass, wenn der Benutzer dieser Richtungsanweisung folgt, zum Sender gelangt. Die Richtungsanweisung kann dabei in der Weise bereitgestellt sein, dass sie den Benutzer entlang einer Feldlinie des empfangenen Sendesignals zum Sender führt oder auch direkt auf gerader Linie. Weiterhin kann das Suchgerät 10 auch dazu ausgelegt sein, von einer Mehrzahl an unterschiedlichen Sendern gesendete Sendesignale zu selektieren, so dass zu jedem Sender eine dem Sender zugeordnete Entfernungs- und/oder Richtungsinformation bereitstellbar ist.

Die Ausgabeeinrichtung 18 bewirkt das Ausgeben der bereitgestellten Suchinformation, insbesondere Richtungs- und/oder Entfernungsinformation,. Diese Ausgabe kann dabei in optischer Form und/oder in akustischer Form erfolgen. Beispielsweise kann eine optische Ausgabe durch ein Head-up-Display bereitgestellt sein. Wie in diesem Beispiel dargestellt, weist der Helm 12 ein Visier 12b auf. Dies kann auf vorteilhafte Weise als Projektionsfläche für das Head-up-Display fungieren. Dazu kann die Ausgabeeinrichtung 18 z.B. eine Projektionseinheit 22 mit einer bildgebenden Einheit und einem Optikmodul umfassen, so dass das von der bildgebenden Einheit korrespondierend zur bereitgestellten Richtungsinformation bereitgestellte Bild durch das Optikmodul auf das Visier 12b projiziert wird. Dazu kann die Projektionseinheit 22 in einem vorderseitigen Randbereich der Helmschale 12a angeordnet sein bzw. eingebettet sein, insbesondere so, dass eine Projektion eines Bildes von der Projektionseinheit 22 auf das Visier 12b möglich ist, ohne durch einen Teil des Helms 12 oder einen Kopf eines Benutzers verdeckt zu werden. Die Richtungsinformation kann dann auf das Visier 12b, beispielsweise in einem zentralen Sichtbereich eines Benutzers bzw. in einem zentralen Bereich des Visiers 12b, projiziert werden oder auch an einen Randbereichbereich des Visiers 12b und somit an einem Gesichtsfeldrand des Benutzers angezeigt werden.

Eine graphische Darstellung der Richtungsinformation, wie beispielsweise durch einen Pfeil, ist dabei besonders vorteilhaft. So kann diese graphische Darstellung der Richtungsinformation als Projektion auf dem Visier 12b beispielsweise der durch das Visier 12b hindurch wahrnehmbaren Umgebung überlagert werden, was eine besonders einfach zu erfassende, leicht ablesbare und interpretierbare Weganweisung für den Benutzer darstellt. Weiterhin kann die Richtungsinformation graphisch auch dadurch angezeigt werden, dass geortete Sender z.B. als Punkte oder Markierungen, insbesondere zusätzlich zur Anzeige des Standorts des Benutzers, angezeigt werden. Richtungs- und/oder Entfernungsangaben können dabei alternativ oder zusätzlich auch in alphanumerischer Form angezeigt werden.

Zur Ausgabe der Richtungsinformation in akustischer Form sind bevorzugt mindestens zwei Lautsprecher 24a, 24b vorgesehen. Diese sind an der Innenseite des Helms 12 angeordnet und jeweils in einem Bereich, in welchem sich die Ohren eines Benutzers bei einem Tragen des Helms 12 befinden. Die akustische Ausgabe durch die Ausgabeeinrichtung 18 kann dabei dergestalt erfolgen, dass die zumindest zwei an den Lautsprechern 24a, 24b bereitgestellten akustischen Signale Tonhöhen und/oder Lautstärkepegel aufweisen, die durch die auszugebende Richtungsinformation bestimmt sind. Beispielsweise kann bei einer Suche die Annäherung an den georteten bzw. zu suchenden Sender durch eine Erhöhung der Tonhöhe kenntlich gemacht werden und eine Rechts-Links-Information kann dem Benutzer durch einen höheren Lautstärkepegel eines entsprechenden Lautsprechers gegenüber dem anderen Lautsprecher vermittelt werden. Besonders vorteilhaft ist es, ein akustisches Signal derart auszugeben, dass das vom ersten Lautsprecher 24a ausgegebene akustische Signal eine von einer bereitgestellten Richtungsinformation abhängige Laufzeitdifferenz und/oder Pegeldifferenz zum vom zweiten Lautsprecher 24b ausgegebenen akustischen Signal aufweist. Beispielsweise kann das akustische Signal auf den jeweiligen Lautsprechern 24a, 24b derart ausgegeben werden, dass eine virtuelle Schallquelle erzeugt wird, deren Richtungs- und/oder Entfernungslokalisation mit dem realen Ort des georteten und zu suchenden Senders übereinstimmt. Somit kann dem Benutzer die Richtungsinformation auf besonders eingängige, leicht zu erfassende und intuitiv zu interpretierende Weise vermittelt werden.

Die Ausgabeeinrichtung 18 kann dabei auch als Ausgabemittel selbst, wie z.B. die Lautsprecher 24a, 24b und/oder die Projektionseinheit 22, bereitgestellt sein.

Darüber hinaus weist das Suchgerät 10 einen Sendemodus auf, in welchem die Sendeeinrichtung Sendesignale sendet, und einen Empfangsmodus auf, in welchem Sendesignale durch die Empfangseinrichtung empfangbar sind. Dabei kann das Suchgerät 10 zwischen einem Empfangsmodus und dem Sendemodus durch manuelle Betätigung durch einen Benutzer umgeschaltet werden. Zum Umschalten kann dabei ein funkgesteuerter Umschalter, ein mechanischer Schalter im Helm 12 oder ein abgesetzter mechanischer Schalter vorgesehen sein. Besonders die Anordnung des Schalters am/im Helm 12 ermöglicht eine besonders einfache und schnelle Handhabung. Der Schalter ist dabei bevorzug so ausgestaltet oder so am Helm 12 angeordnet, dass kein unbeabsichtigtes oder versehentliches oder durch äußere Krafteinwirkung bewirkbares Umschalten möglich ist. Beispielsweise kann der Schalter in einer Vertiefung der Helmschale 12a zurückversetzt angeordnet sein oder durch eine Schutzkappe verdeckt sein. Z.B. kann er so ausgestaltet sein, dass er nur durch eine Zugkraft betätigbar ist oder durch eine kombinierte Druck- und Schubbewegung oder durch einen von einer Druckkraft verschiedenen Betätigungsmechanismus. Damit kann verhindert werden, dass im Falle einer Verschüttung des Benutzers mit dem Helm 12 durch eine Lawine der Helm 12 durch die Krafteinwirkung der Lawine versehentlich vom Sendemodus in den Empfangsmodus schaltet.

Des Weiteren kann das Suchgerät 10 so ausgestaltet sein, dass es beim Anlegen des Helms 12 automatisch eingeschaltet wird und beim Ablegen des Helms 12 automatisch abgeschaltet wird. Dazu kann z.B. eine Sensorik vorgesehen sein, die ein Angelegt-Sein, wie z.B. durch einen im Helm 12 befindlichen Kopf eines Benutzers erfassen kann. Die Detektion des Angelegt-Seins des Helms 12 kann auch über einen Befestigungsriemen 26 erfolgen. Z.B. kann mit einer Schnalle 28 des Riemens 26 oder einem Klick-Verschluss ein Schalter oder ein Sensor gekoppelt sein, mittels welchen das Schließen des Riemens 26 detektiert wird bzw. dabei gleichzeitig auch der Schalter betätigt wird und somit das Suchgerät 10 eingeschaltet wird. In gleicher Weise kann auch durch das Lösen des Riemens 26 das Suchgerät 10 ausgeschaltet werden.

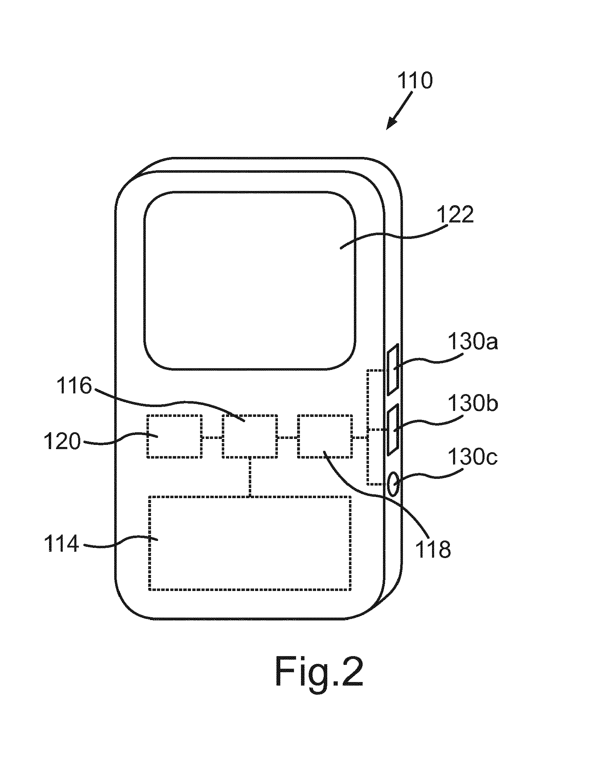

Fig. 2 zeigt eine schematische Darstellung eines Suchgeräts 110 mit Schnittstellenvorrichtungen 130a, 130b, 130c zum Koppeln mit Lautsprechern gemäß einem weiteren Ausführungsbeispiel der Erfindung. Das Suchgerät 110 umfasst hierbei eine Empfangs- und Sendeeinrichtung 114 zum Empfangen und Senden von Sendesignalen, eine Ermittlungseinrichtung 116 zum Ermitteln mindestens einer Suchinformation, insbesondere Richtungsinformation und/oder Entfernungsinformation, auf Basis von empfangenen Sendesignalen eines zu ortenden Senders und eine Ausgabeeinrichtung 118 zum Ausgeben der Suchinformation. Die Sende- und Empfangseinrichtung 114 umfasst auch hier mindestens eine Antenne. Weiterhin kann das Suchgerät wiederum eine Lagesensorik 120 aufweisen, wie z.B. Magnetfeldsensoren, G-Sensoren und/oder Rotationssensoren, um die Stellung der Antennen im Raum ermitteln zu können. Weiterhin kann das Suchgerät 110 ein Display 122 umfassen, das mit der Ausgabeeinrichtung 118 gekoppelt ist und auf dem die Suchinformation durch die Ausgabeeinrichtung 118 ausgegeben werden kann. Die Ausgabe kann dabei in graphischer Form und/oder in alphanumerischer Form erfolgen.

Besonders vorteilhaft ist hierbei die Ausbildung des Suchgeräts 110 mit einer oder mehrer Schnittstellen 130a, 130b, 130c zum Koppeln mit Lautsprechern und der Ausgabeeinrichtung 118, die dazu ausgelegt ist, zwei Signale für jeweils einen Lautsprecher derart bereitzustellen, dass die Suchinformation, insbesondere die Richtungsinformation, durch Laufzeit- und/oder Pegelunterschiede kodiert ist. Die Schnittstelle 130a, 130b, 130c kann dabei als Infrarotschnittstelle 130a, Bluetooth-Schnittstelle 130b oder als Steckerbuchse 130c ausgebildet sein. Das Suchgerät kann dabei auch eine Mehrzahl an unterschiedlich ausgebildeten Schnittstellen 130a, 130b, 130c umfassen. Auf vorteilhafte Weise kann so das Suchgerät 110 mit externen Lautsprechern gekoppelt werden, wie z.B. Ohrhörer, Kopfhörer oder auch in einen Helm integrierte Lautsprecher. Das Suchgerät 110 ist somit flexibel einsetzbar und nicht an eine vorbestimmte akustische Ausgabemöglichkeit gebunden. Darüber hinaus ist das Bereitstellen der Richtungsinformation durch zwei Signale besonders vorteilhaft, da so bei deren akustischer Umsetzung ein Stereo-Klang bzw. Raumklang zu erzeugt werden kann, durch den einem Benutzer die Richtungsinformation auf intuitive besonders eingängige Weise vermittelt werden kann und dieser somit sehr präzise und schnell zum Sender geführt werden kann.

## Patentansprüche

1. Suchgerät (10), insbesondere Lawinen-Verschütteten-Suchgerät, aufweisend
- eine Empfangseinrichtung (14), die dazu ausgelegt ist, Sendesignale zumindest eines Senders zur Ortung des Senders zu empfangen;
- eine Sendeeinrichtung (14), die dazu ausgelegt ist, Sendesignale zu senden;
- eine Ermittlungseinrichtung (16), die dazu ausgelegt ist, anhand von von der Empfangseinrichtung (14) empfangenen Sendesignalen eine Suchinformation bereitzustellen;
- eine Ausgabeeinrichtung (18), die dazu ausgelegt ist, eine von der Ermittlungseinrichtung (16) bereitgestellte Suchinformation auszugeben;
**dadurch gekennzeichnet,**
**dass** zumindest die Ausgabeeinrichtung (18) in einen Helm (12) integriert ist.

2. Suchgerät (10) nach Anspruch 1,
**dadurch gekennzeichnet,**
**dass** der Helm (12) ein Visier (12b) umfasst, wobei die Ausgabeeinrichtung (18) dazu ausgelegt ist, die Suchinformation optisch auf dem Visier (12b) anzuzeigen.

3. Suchgerät (10) nach einem der vorhergehenden Ansprüche,
**dadurch gekennzeichnet,**
**dass** die Ausgabeeinrichtung (18) akustische Ausgabemittel umfasst und die Ausgabeeinrichtung (18) dazu ausgelegt ist, die Suchinformation über die Ausgabemittel akustisch auszugeben.

4. Suchgerät (10) nach Anspruch 3,
**dadurch gekennzeichnet,**
**dass** die Ausgabemittel als mindestens ein erster Lautsprecher (24a) und mindestens ein zweiter Lautsprecher (24b) ausgebildet sind.

5. Suchgerät (10) nach einem der vorhergehenden Ansprüche,
**dadurch gekennzeichnet,**
**dass** die Ausgabeeinrichtung (18) dazu ausgelegt ist, ein akustisches Signal durch den ersten und zweiten Lautsprecher (24a; 24b) derart auszugeben, dass sich das vom ersten Lautsprecher (24a) ausgegebene akustische Signal abhängig von der bereitgestellten Suchinformation in zumindest einer Eigenschaft vom vom zweiten Lautsprecher (24b) ausgegebenen akustischen Signal unterscheidet.

6. Suchgerät (10) nach einem der vorhergehenden Ansprüche,
**dadurch gekennzeichnet,**
**dass** die Ausgabeeinrichtung (18) dazu ausgelegt ist, ein akustisches Signal derart auszugeben, dass das vom ersten Lautsprecher (24a) ausgegebene akustische Signal eine von einer bereitgestellten Suchinformation abhängige Laufzeitdifferenz und/oder Pegeldifferenz zum vom zweiten Lautsprecher (24b) ausgegebenen akustischen Signal aufweist.

7. Suchgerät (10) nach einem der vorhergehenden Ansprüche,
**dadurch gekennzeichnet,**
**dass** die Ausgabeeinrichtung (18) dazu ausgelegt ist, das akustische Signal als einen Ton, ein Tongemisch, einen Klang und/oder ein Klangemisch bereitzustellen.

8. Suchgerät (10) nach einem der vorhergehenden Ansprüche,
**dadurch gekennzeichnet,**
**dass** das Suchgerät (10) im Helm (12) integriert ist.

9. Suchgerät (10) nach einem der vorhergehenden Ansprüche,
**dadurch gekennzeichnet,**
**dass** das Suchgerät (10) einen Sendemodus aufweist, in welchem die Sendeeinrichtung (14) Sendesignale sendet, und einen Empfangsmodus aufweist, in welchem Sendesignale durch die Empfangseinrichtung (14) empfangbar sind, wobei das Suchgerät (10) zwischen einem Empfangsmodus und dem Sendemodus durch manuelle Betätigung durch einen Benutzer umschaltbar ist.

10. Suchgerät (10) nach einem der vorhergehenden Ansprüche,
**dadurch gekennzeichnet,**
**dass** das Suchgerät (10) dazu ausgelegt ist, bei einem Anlegen des Helms (12) automatisch einzuschalten.

11. Suchgerät (10) nach einem der vorhergehenden Ansprüche,
**dadurch gekennzeichnet,**
**dass** das Suchgerät (10) dazu ausgelegt ist, bei einem Ablegen des Helms (12) automatisch abzuschalten.

12. Suchgerät (10) nach einem der vorhergehenden Ansprüche,
**dadurch gekennzeichnet,**
**dass** das Suchgerät (10) drei Antennen zum Senden und Empfangen von Sendesignalen aufweist.

13. Suchgerät (10) nach einem der vorhergehenden Ansprüche,
**dadurch gekennzeichnet,**
**dass** das Suchgerät (10) dazu ausgelegt ist, von einer Mehrzahl an unterschiedlichen Sendern gesendete Sendesignale zu selektieren.

14. Verfahren zum Betreiben eines Suchgeräts (10), wobei im Falle, dass eine Empfangseinrichtung (14) des Suchgeräts (10) Sendesignale zumindest eines Senders zur Ortung des Senders empfängt, eine Ermittlungseinrichtung (16) des Suchgeräts (10) anhand der empfangenen Sendesignale eine Suchinformation bereitstellt und eine Ausgabeeinrichtung (18) des Suchgeräts (10) die bereitgestellte Suchinformation ausgibt,
**dadurch gekennzeichnet,**
**dass** die Suchinformation mittels eines Helms (12), in welchen zumindest die Ausgabeeinrichtung (18) des Suchgeräts (10) integriert ist, ausgegeben wird.

15. Suchgerät (110), insbesondere Lawinen-Verschütteten-Suchgerät, aufweisend
- eine Empfangseinrichtung (114), die dazu ausgelegt ist, Sendesignale zumindest eines Senders zur Ortung des Senders zu empfangen;
- einer Sendeeinrichtung (114), die dazu ausgelegt ist, Sendesignale zu senden;
- eine Ermittlungseinrichtung (116), die dazu ausgelegt ist, anhand von von der Empfangseinrichtung empfangenen Sendesignalen eine Suchinformation bereitzustellen;
- eine Ausgabeeinrichtung (118), die dazu ausgelegt ist, eine von der Ermittlungseinrichtung (116) bereitgestellte Suchinformation auszugeben;
**dadurch gekennzeichnet,**
**dass** die Ausgabeeinrichtung (118) eine Schnittstelle (130a, 130b, 130c) zum Koppeln mit mindestens zwei Lautsprechern aufweist, und dazu ausgelegt ist, ein erstes Signal für zumindest einen ersten Lautsprecher bereitzustellen und ein zweites Signal für zumindest einen zweiten Lautsprecher bereitzustellen, wobei das erste und das zweite Signal derart beschaffen sind, dass diese von einem jeweiligen Lautsprecher in zumindest ein akustisches Signal umsetzbar sind, wobei die Ausgabeeinrichtung (118) dazu ausgelegt ist, das erste und zweite Signal derart bereitzustellen, dass die Suchinformation durch Laufzeit- und/oder Pegelunterschiede des ersten und zweiten Signals kodiert ist.
